# FASCICULE DE BREVET EUROPEEN

(11) **EP 0 756 406 B1**
(45) Date de publication et mention de la délivrance du brevet: **12.03.2003**
(21) Numéro de dépôt: 95401787.7
(22) Date de dépôt: 27.07.1995
(51) Int. Cl.: H04M 1/02, E05F 1/12

(54) **Boitier électronique à volet pivotant**
Elektronisches Gehäuse mit einer Schwenkklappe
Electronic easing with a hinged flap

(43) Date de publication de la demande: 29.01.1997
(73) Titulaire: SOCIETE D'APPLICATIONS GENERALES D'ELECTRICITE ET DE MECANIQUE SAGEM, 75783 Paris Cédex 16 (FR)
(72) Inventeur: Gobin, Philippe, F-95490 Vaureal (FR)
(74) Mandataire: Bloch, Gérard

(56) Documents cités:
- EP-A- 0 535 912
- WO-A-92/17973
- WO-A-93/18592
- US-A- 4 976 007
- US-A- 5 257 310

## Description

La présente invention concerne un boîtier électronique comportant un clavier de touches et un volet de protection du clavier monté pivotant sous l'action de moyens de rappel d'une position de fermeture et de protection à une position d'ouverture et de fonctionnement.

Comme boîtiers électroniques de ce type, on peut citer les combinés de téléphone sans fil ou les boîtiers de télécommande.

Ceux actuellement dans le commerce comportent, outre un organe de butée du volet en position d'ouverture, un ou deux ressorts d'ouverture montés dans les organes de pivotement du volet.

US 4976007 décrit un ordinateur personnel portable dont l'écran est un volet de protection du clavier. L'écran est monté pivotant sous l'action de deux moyens de pivotement disposés en axes différents et comportant un pivot et un ressort. Ils permettent, respectivement, d'ouvrir et de lever l'écran et de maintenir l'écran incliné sous plusieurs angles.

L'entraînement d'une pièce mécanique en butée contre une autre n'est généralement pas très satisfaisant, sans parler de la place occupée par l'organe de butée au détriment d'autres composants. De surcroît, les ressorts sont montés dans leur logement avec un jeu aussi bien angulaire que transversal qui peut affaiblir le volet et contrarier sa fermeture.

La présente invention vise à palier ces risques et inconvénients.

A cet effet, l'invention concerne un boîtier du type mentionné ci-dessus, caractérisé par le fait que les moyens de rappel comprennent des premiers moyens agencés pour faire pivoter le volet en deçà de sa position d'ouverture et des seconds moyens agencés pour faire pivoter le volet au-delà de sa position d'ouverture.

Jusqu'à la position de repos des premiers moyens de rappel, les premiers et seconds moyens exercent sur le volet une action motrice d'ouverture; au-delà, les seconds moyens d'ouverture continuent d'exercer une action motrice d'ouverture jusqu'à ce qu'elle soit compensée par l'action alors de freinage des premiers moyens, en position d'équilibre du volet, en deçà de la position de repos des seconds moyens de rappel.

Dans la forme de réalisation préférée du boîtier de l'invention, les moyens de rappel comprennent deux ressorts hélicoïdaux précontraints différemment en position de fermeture du volet. Ainsi, les angles d'armement des deux ressorts sont respectivement inférieur et supérieur à l'angle de pivotement du volet de sa position de fermeture à sa position d'ouverture.

Il est avantageux que l'une des extrémités de chaque ressort soit ancrée dans le boîtier et que l'autre extrémité soit introduite dans une fente de détrompage d'un pivot du volet sur lequel est monté le ressort considéré.

L'invention sera mieux comprise à l'aide de la description suivante de la forme de réalisation préférée du boîtier de l'invention, en référence au dessin annexé, sur lequel
- la figure 1 est une vue en perspective éclatée de la coque supérieure du boîtier, du volet de protection et des ressorts d'ouverture et
- la figure 2 est une vue en perspective de la paire de ressorts d'ouverture.

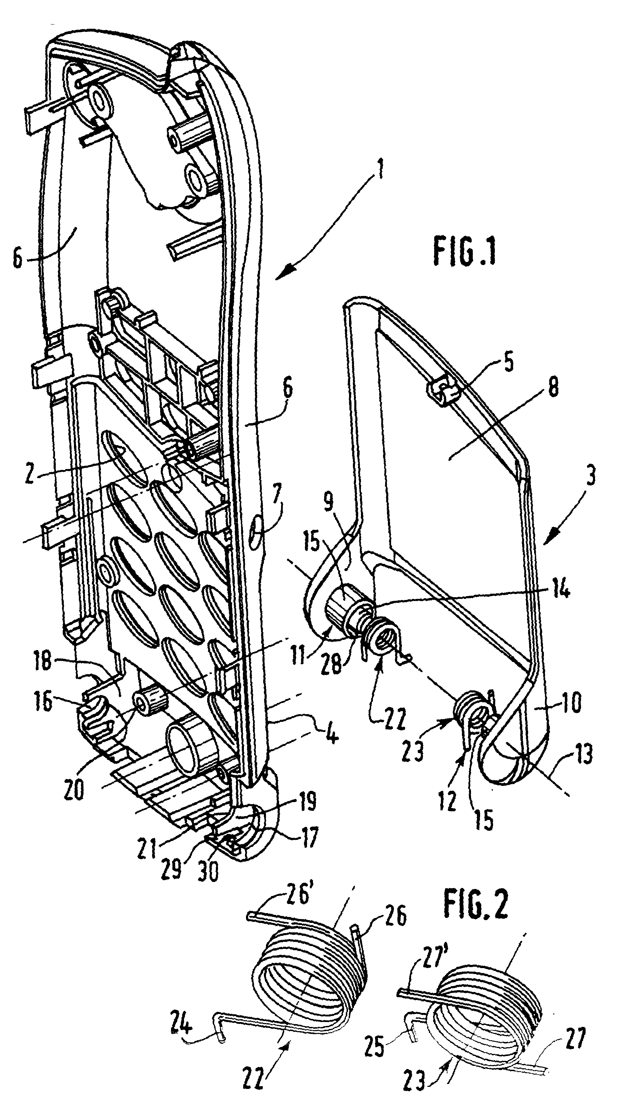

Le boîtier de l'invention, en l'espèce et ici un combiné de téléphone sans fil, comporte une paire de coques avant et arrière dont seule la coque avant 1 a été représentée sur la figure 1, vue de l'intérieur.

La partie basse de la coque 1 est percée d'orifices 2 de passage de touches d'un clavier protégées, à l'état de repos, par un volet de protection extérieur 3. Le volet 3 est monté pivotant sur la coque 1. A l'état de repos du boîtier, c'est-à-dire en position de fermeture du volet 3, celui-ci est plaqué contre la paroi extérieure 4 de la coque 3 et maintenu dans cette position par un mécanisme classique comportant, ici, un crochet 5 sur le volet 3 et une tige poussoir montée sur ressort et en saillie hors d'une paroi latérale 6 de la coque 1 par un orifice 7.

Le volet 3 comporte une portion principale 8 faisant fonction de couvercle, de laquelle s'étendent perpendiculairement et aux deux coins de la partie basse, opposée à la partie portant le crochet 5, deux joues latérales de pivotement 9, 10 portant respectivement deux pivots intérieurs 11, 12 d'axe 13.

Il s'agit de pivots doubles, avec, chacun, un pivot central plein 14 et un manchon 15, plus court, autour du pivot 14.

En partie basse extrême, les parois latérales 6 de la coque avant 1 ont été échancrées pour ménager un palier externe 16, 17, de forme sensiblement circulaire, support d'un manchon de pivotement 15 du volet 3. Parallèlement aux parois latérales 6 de la coque, à relativement faible distance des paliers 16, 17, s'étendent deux nervures intérieures 18, 19 dans lesquelles sont ménagées des échancrures obliques 20, 21 pour faire fonction de paliers supports pour les pivots centraux 14 des deux joues de pivotement 9, 10 du volet.

Deux ressorts d'ouverture 22, 23 sont respectivement montés sur les pivots 11, 12, glissés partiellement entre le pivot central 14 et le manchon 15 de ces pivots doubles. Il s'agit de ressorts hélicoïdaux avec une extrémité interne coudée 24, 25, d'ancrage dans la coque 1, et une extrémité externe 26, 27 glissée dans une fente latérale 28 du manchon 15 des pivots 11, 12 du volet 3.

Légèrement en deçà de la paroi transversale 29 de la coque 1, s'étendant entre les paliers 16, 17, et parallèlement à elle s'étend, entre chaque palier externe 16, 17 et sa nervure palier associée 18, 19, une nervure 30. Chaque extrémité coudée 24, 25 des ressorts 22, 23 est glissée entre la nervure 30 correspondante et la paroi transversale 29 de la coque 1 pour y être ancrée.

La fente latérale 28 de réception de l'autre extrémité des ressorts est inclinée sur un plan diamétral du manchon 15 des pivots 11, 12, en sens inverse d'un pivot à l'autre, pour faire fonction de détrompage et éviter ainsi d'intervertir les ressorts 22, 23 respectivement associés aux deux joues de pivotement 9, 10 du volet.

En position de fermeture du volet 3, illustrée sur la figure 1, les ressorts 22, 23 sont précontraints, ou armés, mais différemment.

En référence à la figure 2, les extrémités externes des ressorts sont référencées 26, 27 en position de repos et 26', 27' en position de précontrainte.

En position de précontrainte, les extrémités 26', 27' des ressorts sont parallèles entre elles, leurs angles d'armement, en position de fermeture du volet 3, sont différents, celui du ressort 22 étant inférieur à celui du ressort 23, ces deux angles d'armement, par exemple 95° et 175 ° respectivement, encadrant l'angle effectif d'ouverture du volet 3, soit 135° dans l'exemple considéré.

En d'autres termes encore, quand on déclenche le mécanisme 5, 7 de fermeture du volet 3, jusqu'à la position de repos (26) du ressort 22, les deux ressorts exercent sur le volet 3 une action motrice d'ouverture; au-delà, le second ressort 23 continue d'exercer une action motrice, pas jusqu'en position de repos 27, mais jusqu'en position de repos intermédiaire du volet 3 dans laquelle l'action motrice du ressort 23 et l'action de freinage du ressort 22, générée au-delà de sa position de repos 26, se compensent mutuellement.

## Revendications

1. Boîtier électronique (1) comportant un clavier de touches (2) et un volet (3) de protection du clavier monté pivotant sous l'action de moyens de rappel d'une position de fermeture et de protection à une position d'ouverture et de fonctionnement, **caractérisé par le fait que** les moyens de rappel comprennent des premiers moyens (22) agencés pour faire pivoter le volet (3) en deçà de sa position d'ouverture et des seconds moyens (23) agencés pour faire pivoter le volet (3) au-delà de sa position d'ouverture, les dits premiers (22) et seconds (23) moyens comprenant, respectivement, deux ressorts précontraints différemment montés sur des pivots (11,12) d'un même axe (13).

2. Boîtier selon la revendication 1, dans lequel les moyens de rappel comprennent deux ressorts hélicoïdaux (22,23) précontraints différemment en position de fermeture du volet (3).

3. Boîtier selon la revendication 2, dans lequel les deux ressorts (22,23) sont montés sur deux pivots (11,12) du volet (3).

4. Boîtier selon l'une des revendications 2 et 3, dans lequel l'une (24,25) des extrémités de chaque ressort (22,23) est ancrée dans le boîtier (1) et l'autre extrémité (26,27) est introduite dans une fente de détrompage (28) du pivot correspondant (11,12).

## Claims

1. Electronic casing (1) comprising a keyboard (2) and a protective flap (3) for the keyboard mounted pivoting under the action of return means from a closed protective position to an open operating position, **characterised by** the fact that the return means comprise first means (22) arranged to make the flap (3) pivot this side of its open position and second means (23) arranged to make the flap (3) pivot beyond its open position, said first (22) and second (23) means comprising respectively two differently pre-stressed springs mounted on pivots (11, 12) of the same axis (13).

2. Casing according to claim 1, wherein the return means comprise two helical springs (22, 23) which are differently pre-stressed in the closed position of the flap (3).

3. Casing according to claim 2, wherein the two springs (22, 23) are mounted on two pivots (11, 12) of the flap (3).

4. Casing according to one of claims 2 and 3, wherein one (24, 25) of the ends of each spring (22, 23) is anchored in the casing (1) and the other end (26, 27) is introduced into a polarising slot (28) of the corresponding pivot (11, 12).

## Patentansprüche

1. Elektronikgehäuse (1) mit einer Tastatur (2) und einer Schutzklappe (3) für die Tastatur, die unter der Einwirkung von Rückstelleinrichtungen aus einer Verschluss- und Schutzstellung zu einer Öffnungs- und Betriebsstellung schwenkbar angebracht ist, **dadurch gekennzeichnet, dass** die Rückstelleinrichtungen erste Einrichtungen (22) umfassen, die dazu ausgelegt sind, die Klappe (3) aus ihrer Öffnungsstellung zurückschwenken zu lassen, und zweite Einrichtungen (23), die dazu ausgelegt sind, die Klappe (3) über ihre Öffnungsstellung hinaus schwenken zu lassen, wobei die ersten (22) und zweiten (23) Einrichtungen jeweils **eine** unterschiedlich vorgespannte Feder umfassen, die an Drehzapfen (11, 12) ein und derselben Achse (13) angebracht sind.

2. Gehäuse nach Anspruch 1, bei dem die Rückstelleinrichtungen zwei Spiralfedern (22, 23 ) umfassen, die in der Schließstellung der Klappe (3) unterschiedlich vorgespannt sind.

3. Gehäuse nach Anspruch 2, bei dem die beiden Federn (22, 23) an zwei Drehzapfen (11, 12) der Klappe (3) angebracht sind.

4. Gehäuse nach einem der Ansprüche 2 und 3, bei dem das eine (24, 25) der Enden jeder Feder (22, 23) im Gehäuse (1) verankert ist, und das andere Ende (26, 27) in einen Unverwechselbarkeitsschlitz (28) des entsprechenden Drehzapfens (11, 12 ) eingeführt ist.
